# EUROPÄISCHE PATENTSCHRIFT

(11) **EP 2 279 057 B1**
(45) Veröffentlichungstag und Bekanntmachung des Hinweises auf die Patenterteilung: **07.09.2011**
(21) Anmeldenummer: 09753504.1
(22) Anmeldetag: 26.03.2009
(51) Int. Cl.: B23P 19/04, B27M 3/00

(54) **VORRICHTUNG FÜR DAS SETZEN EINES TÜRBANDES**
DEVICE FOR INSTALLING A HINGE PLATE
DISPOSITIF POUR LE POSAGE D'UNE PAUMELLE

(30) Priorität: 27.05.2008 DE 102008025300
(43) Veröffentlichungstag der Anmeldung: 02.02.2011
(73) Patentinhaber: Lehbrink Spezialmaschinen GmbH, 33818 Leopoldshöhe (DE)
(72) Erfinder: BUROW, Hans-Jürgen, 33813 Oerlinghausen (DE)
(74) Vertreter: Holland, Ralf
(86) Internationale Anmeldenummer: PCT/DE2009/000390
(87) Internationale Veröffentlichungsnummer: WO 2009/143788

(56) Entgegenhaltungen:
- DE-A1- 1 453 190
- DE-U- 7 431 482
- DE-U1- 20 305 449
- FR-A- 2 155 698
- US-A- 3 381 725

## Beschreibung

Die Erfindung betrifft eine Vorrichtung für das Setzen eines Ober-, Mittel- und/oder eines Unterteils eines Türbandes an ein Türblatt, wobei den Schäften der Ober- und/oder Unterteilen Bolzen vorstehen, mit einem zangenartigen, positionierbaren Greifer für ein Fassen des Schafts und ein Ansetzen des Ober- und/oder des Unterteils an das Türblatt gemäß dem Oberbegriff des Anspruchs 1. Eine solche Vorrichtung ist aus der US 3, 381, 725 bekannt.

Türbänder, Türangeln oder dergleichen Scharniere, die ein Verschwenken der Türe an einer Zarge oder einem Blendrahmen ermöglichen, sind in vielfältigen Ausführungsformen bekannt und bewährt. Bei zweiteiligen Türbändern wird ein Bandoberteil regelmäßig mittels eines einem Schaft des Bandoberteils vorstehenden Bolzens festgelegt. Das Bandunterteil entsprechend an einem Blendrahmen oder einer Zarge. Die Verbindung des Bandoberteils und des Bandunterteils erfolgt über einen Drehbolzen.

Ein solches, bekanntes Türband weist Bandober- bzw. Bandunterteile auf, deren Schaft im Wesentlichen zentral ein einziger Bolzen vorsteht, der mit einem Einschraubgewinde versehen ist.

Eine einfache, handbetätigte Vorrichtung für das Setzen solcher Bandteile ist aus der DE74 31 482 U bekannt, die handkurbelartig ausgebildet das Eindrehen des einzigen Bolzens erleichtert.

Eine andere bekannte Vorrichtung zum Setzen derartiger Türbänder weist einen zangenartigen, positionierbaren Greifer für ein Fassen des Schaftes und ein Ansetzen des Bandteils an das Türblatt auf, wo es durch Drehen des Greifers eingebracht wird.

Neben solch einfachen Türbändern sind insbesondere für schwere Türen, beispielsweise Haustüren, Feuerschutztüren oder dergleichen, Türbänder bekannt, bspw. in der DE 203 05 449 U1 erläutert, die über ein oder mehrere, zwischen einem Ober- und einem Unterteil angeordnete Mittelteile aufweisen. Aus Befestigungsgründen sind solche Bandteile zumeist mit mehreren, einem Schaft vorstehenden Bolzen versehen.

Bei einem anderen, bekannten Türband ist ein zentral angeordneter Bolzen mit einem Schraubgewinde versehen. Dieser Bolzen ist drehbar an dem Schaft festgelegt und kann mittels eines Innensechskant, eines Kreuzschlitzschraubendrehers oder dergleichen in eine Bohrung eingeschraubt werden. Die übrigen Schäfte sind glatt und werden mit dem Eindrehen des mit dem Gewinde versehenen Bolzens in eigene Bohrungen eingebracht.

Aus der US-A-3381725 ist eine Einsetzvorrichtung zum Einsetzen von Beschlagteilen bekannt, bei der ein Einsetzkopf mit einem zangenartigen Greifer an einer drehbaren und in Achsrichtung bewegbaren Welle angeordnet ist, die beim Einsetzen des Beschlagteils eine Drehbewegung und eine Vorschubbewegung in Richtung des Werkstücks ausführt.

Die DE 1453190A1 offenbart einen Bohr- und Eindrehautomat zum Befestigen von einschraub- und/oder einsteckbaren Beschlagteilen. Dieser Automat weist ein übliches Bohrfutter auf, das gegen verschiedene Köpfe mit Greifvorrichtungen für das Fassen eines Beschlages austauschbar ist. Diese Beschläge können mit diesem Automaten eingedreht oder eingepresst werden.

Ferner erläutert die FR-A-2155698 eine Vorrichtung für die Montage von Möbelbeschlägen wie Scharnieren, für deren Verschrauben bei einer Endmontage ein Schraubwerkzeug mit automatischer Schraubenzufuhr vorgesehen ist.

Vor diesem technischen Hintergrund macht die Erfindung es sich zur Aufgabe, eine Vorrichtung für das Setzen eines Bandteils eines Türbandes an ein Türblatt zur Verfügung zu stellen, mit der unterschiedlichste Türbandteile gesetzt werden können.

Gelöst wird diese technische Problematik bei einer Vorrichtung für das Setzen eines Bandteils eines Türbandes an ein Türblatt gemäß Anspruch 1.

Vorteilhafte Ausgestaltungen der Vorrichtung sind in den Unteransprüchen angegeben.

Erfasst der Greifer den Schaft eines Bandteils mit lediglich einem, mit einem Gewinde versehenen Bolzen, so kann durch Drehen der Hohlspindel mit angeschlossenem Greifer das Bandteil in Rotation versetzt und somit der Bolzen in eine Bohrung in einem Türblatt eingebracht werden. Hierzu ist der Greifer positionierbar und entsprechend die Hohlspindel längs verschiebbar ausgebildet.

Voraussetzung für das Eindrehen des mit einem Schraubgewinde versehenen Schaftes ist, dass die Hohlwelle und der Schaft koaxial zu einander angeordnet sind. Es ist deshalb der Schaft von dem Greifer exakt ausgerichtet zu erfassen.

Ist ein Bandteil zu setzen, dessen Schaft mehrere Bolzen vorstehen, so ist der Schaft derart von dem Greifers zu erfassen, dass der mit einem Schraubgewinde versehene Bolzen koaxial mit der Welle angeordnet ist. Es kann dann das an dem greiferseitigen Ende der Welle befindliche Werkzeug, vorzugsweise ein auswechselbares Bit, in einen Schraubenkopf des drehbar an dem Schaft angeordneten Bolzens mit Schraubgewinde eingreifen. Hierzu ist die Welle innerhalb der Hohlspindel längs verschiebbar geführt und es kann durch Drehen des Bolzens dieser in eine Bohrung eingebracht werden, wodurch die glatten Bolzen ebenfalls in entsprechende Bohrungen eingezogen werden.

Insofern ist es zweckmäßig, wenn auch die Welle koaxial in der Hohlspindel angeordnet ist.

Bei Vorrichtungen der eingangs erläuterten Art werden die Bandteile aus Magazinen dem Greifer zugeführt. Da von der Vorrichtung nach der Erfindung unterschiedlichste Bandteile zu setzen sind, ist weiter ein positionierbares Rundmagazin vorgesehen, das über seinen Umfang mit Aufnahmen für die Schäfte von Bandteilen von Türbändern versehen ist und das mittels einer Übergabevorrichtung aus einem Wechselmagazin bestückt wird.

Eine solche Maßnahme weist den Vorteil auf, dass, entsprechend der zusetzenden Bandteile, diese in exakter Reihenfolge in dem Rundmagazin aufgenommen und dem Greifer zur Verfügung gestellt werden.

Es dient jedoch das Rundmagazin nicht unmittelbar der positionsgenauen Zuführung der Bandteile an den Greifer, sondern im Wesentlichen der Andienung vorsortierter Bandteile, die an ein Türblatt anzusetzen sind. Es ist deshalb zweckmäßig, wenn vorgesehen ist, dass die Bolzen der aufgenommenen Bandteile der Brandung des Rundmagazins vorstehen, so dass ein Fassen der Bolzen in einfacher Weise möglich ist.

Es kann dann in weiterer Ausgestaltung der Vorrichtung nach der Erfindung vorgesehen sein, dass zentral vor dem Greifer eine Drehvorrichtung mit Aufnahmen für die Bolzen vorgesehen ist, das nach der Übergabe eines Bandteils von dem Rundmagazin an die Drehvorrichtung und nach einer Drehung der Drehvorrichtung ein Schaft für ein Erfassen vor dem Greifer positioniert ist.

Insbesondere ist dabei die Aufnahme für die Aufnahme eines mit einem Schraubgewinde versehenen Bolzen ausgelegt und ist die Aufnahme nach der Drehung der Drehvorrichtung vor dem Erfassen des Schafts des Bandteils durch den Greifer koaxial zur Welle bzw. Hohlspindel ausgerichtet, so dass der geöffnete Greifer, linear vorgefahren, für ein Ansetzen und Verschrauben des Bandteils dieses dann exakt positioniert erfasst.

Für das Setzen des Bandteils an ein Türblatt ist der Greifer längs verschiebbar. Es ist daher die Drehvorrichtung mit Aufnahmen aus dem Weg des Greifers zu verbringen. Zweckmäßigerweise wird hierfür ein Verfahr- und/oder ein Verschwenkweg zwischen dem Greifer und der Drehvorrichtung längs der Drehachse der Drehvorrichtung vorgesehen sein.

Ein Verfahr- und/oder ein Verschwenkweg zwischen dem Greifer und der Drehvorrichtung längs der Drehachse der Hohlspindel erlaubt es ferner, den Schaft immer exakt in einem vorgegebenen Abstand vor dem Greifer für ein Erfassen zu positionieren, auch wenn die von den Aufnahmen der Drehvorrichtung aufgenommenen Bolzen der Schäfte unterschiedliche Längen aufweisen.

In weiterer konstruktiver Ausgestaltung ist bei der Vorrichtung nach der Erfindung vorgesehen, dass eine Drehachse der Drehvorrichtung mit einer Schwenkachse des Trägers gegenüber einem Kreuzsupport zusammenfällt. Es kann damit die Längsachse der Welle bzw. der Hohlspindel gegenüber einem eben ausgerichteten Türblatt angestellt werden und kann das Bandteil unter einem vorgegebenen Winkel auch angesetzt werden. Es ist deshalb weiter vorgesehen, dass der Träger gegenüber dem Kreuzsupport längs der Drehachse der Hohlspindel verfahrbar ist, so dass die mit Gewinde versehenen Schäfte immer koaxial zu der Welle bzw. Hohlspindel ausgerichtet an das Türblatt angesetzt und in entsprechende Bohrungen eingedreht werden können.

Die Erfindung wird anhand der Zeichnung näher erläutert, in der lediglich ein Ausführungsbeispiel schematisch dargestellt ist. In der Zeichnung zeigt:
- Fig. 1:: eine Übersicht einer Vorrichtung nach der Erfindung,
- Fig. 2:: in einer vergrößerten, ausschnittsweisen Darstellung den Träger mit Greifer,

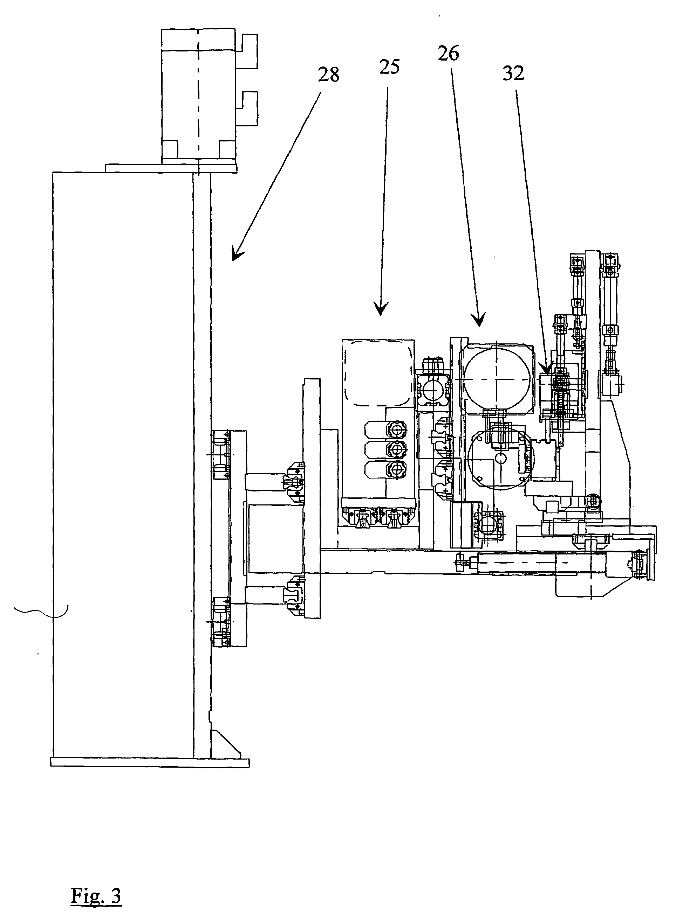

- Fig. 3:: eine stirnseitige Ansicht gem. des Pfeils III in Fig. 1,
- Fig. 4:: ein erstes Türband und
- Fig. 5:: ein zweites Türband

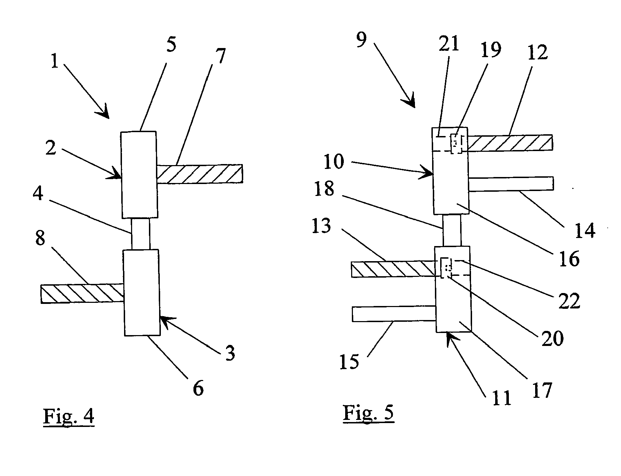

Figur 4 zeigt ein einfaches Türband 1 mit einem Bandoberteil 2, das an einem Türblatt anzusetzen ist, und mit einem Bandunterteil 3, das an einer Zarge, einem Blendrahmen oder dergleichen festzulegen ist. Die Verbindung zwischen dem Bandoberteil 2 und dem Bandunterteil 3 wird durch einen Drehbolzen 4 sichergestellt. Das Bandoberteil 2 wie auch das Bandunterteil 3 verfügen jeweils über einen Schaft 5,6, dem jeweils ein mit einem Schraubgewinde versehener Bolzen 7,8 vorsteht. Die Bolzen 7,8, fest mit den Schäften 5,6 verbunden, sind in entsprechenden Bohrungen des Türblatts bzw. eines Rahmens einzuschrauben, wozu ein Drehen der vollständigen Bandteile 2,3 notwendig ist.

Anhand der Fig. 5 wird eine weitere Ausführungsform eines Türbandes 9 erläutert, dessen Bandoberteil 10 und dessen Bandunterteil 11 jeweils ein mit einem Schraubgewinde versehener Bolzen 12,13 und ein glatter Bolzen 14,15 einem Schaft 16,17 vorstehen. Ein Drehbolzen 18 stellt die Verbindung zwischen Bandoberteil 10 und Bandunterteil 11 entsprechend dem voranstehend erläuterten Ausführungsbeispiel eines Türbandes 1 her.

Die mit einem Schraubgewinde versehenen Bolzen 12,13 sind in den Schäften 16,17 drehbar gelagert und mit Schraubköpfen 19,20 versehen. Einem durch eine Bohrung 21,22 an die Schraubköpfe 19,20 angesetzten Drehwerkzeug wie einem Inbusschlüssel, einem Kreuzschlitzschraubendreher oder dergleichen ist so ein Verdrehen der Bolzen 12,13 ermöglicht. Mit dem Eindrehen der mit einem Schraubgewinde versehenen Bolzen 12,13 werden auch die beiden anderen, den Schäften 16,17 vorstehenden, glatten Bolzen 14,15 in entsprechende Bohrungen eines Türblatts bzw. einer Zarge oder dergleichen eingezogen.

Von Türbändern 9 gem. Fig. 5 gibt es eine Vielzahl von Varianten. So können bspw. durchaus mehr als ein glatter Bolzen 14,15 einem Schaft 16,17 vorstehen. Auch können zwischen dem Bandoberteil 10 und dem Bandunterteil 17 ein oder mehrere Bandmittelteile angeordnet sein.

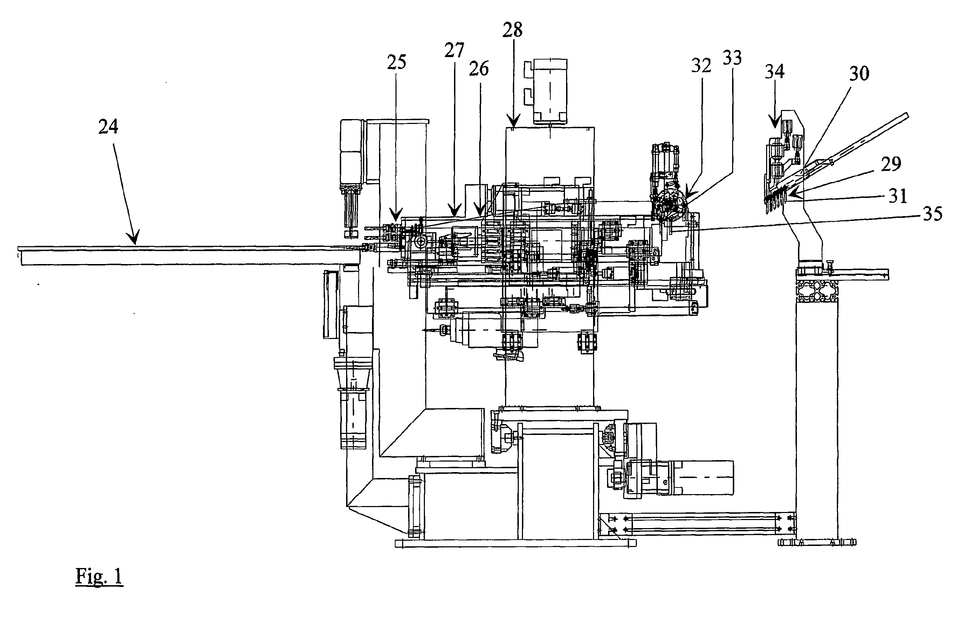

Fig. 1 zeigt ein Bearbeitungszentrum für Türblätter 24, das neben Bohraggregaten 25 eine Vorrichtung 26 aufweist, mit der Bandteile von Türbändern 1,9 der voranstehend erläuterten Art an Türblätter 24 gesetzt werden können.

Um das Bohraggregat 25 und die auf einem Träger 27 angeordnete Vorrichtung 26 weitestgehend freizügig zu verfahren, sind diese an einem ausreichend stabil vorzusehenden Kreuzsupport 28 verfahrbar angeordnet.

Für das Setzen von Türbändern mittels der Vorrichtung 26 nach der Erfindung werden Bandteile 29 in Wechselmagazinen 30 bereit gehalten, wobei die Schäfte der Bandteile 29 in den Wechselmagazinen 30 aufgenommen sind und die Bolzen 31 frei nach unten hängen.

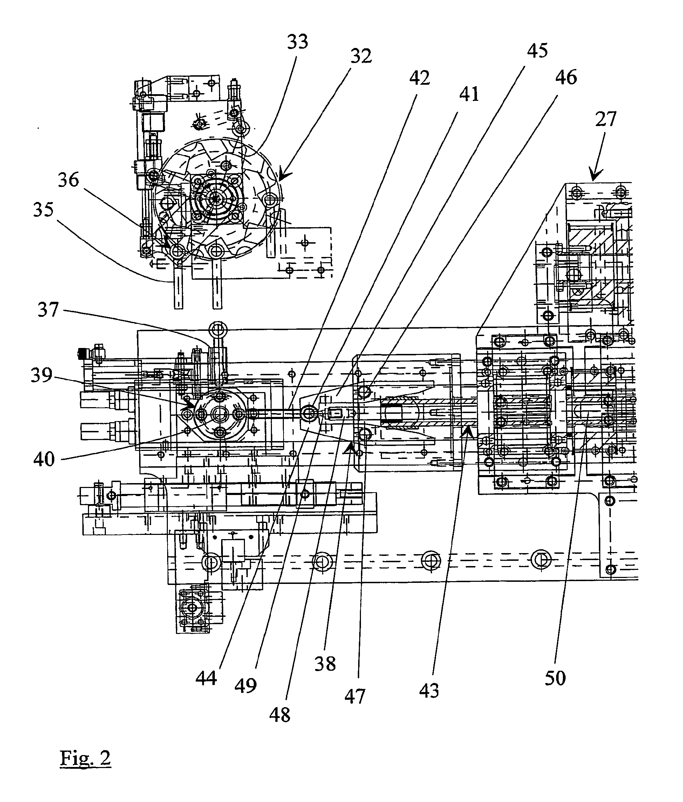

Der Vorrichtung 26 zugeordnet ist ein Rundmagazin 32 mit Aufnahmen 33 für die Schäfte der Bandteile 29. Mittels geeigneter Übergabevorrichtungen 34 werden die Bandteile 29 in der zu montierenden Reihenfolge an das Rundmagazin 32 übergeben, in der wiederum die Schäfte der Bandteile 36 gehaltert und die Bolzen 35 frei nach unten hängen können, vgl. Fig. 2.

Aufgrund dieser Maßnahme ist es möglich, dass von dem Rundmagazin 32 die Bandteile 36 in einfacher Weise an Aufnahmen 37 einer zentral vor einem Greifer 38 angeordneten Drehvorrichtung 39 übergeben werden können, deren Drehachse 40 senkrecht auf der Zeichenebene steht.

Nach einer Vierteldrehung, in Fig. 2 im Uhrzeigersinn, ist der Schaft 41 für ein Erfassen durch den Greifer 38 exakt positioniert.

Hat der Greifer 38, wie in Fig. 2 dargestellt, den Schaft 41 eines Bandteils erfasst, wird durch eine Relativbewegung zwischen der Drehvorrichtung 39 und dem Greifer 38 der Bolzen 42 freigegeben und kann, nach Verfahren oder Verschwenken der Drehvorrichtung 39 aus der Bahn des Greifers 38, dieser den Bolzen 42 an einer entsprechenden Bohrung eines Türblatts 24 ansetzen.

Der Greifer 38 ist an eine drehbare und längs verschiebbare Hohlspindel 43 angeschlossen. Die Hohlspindel 43, die durch Längsverschiebung auch die Backen 44,45 des Greifers 38 gegen die Kraft zweier auf zwei Lagerbolzen 46,47 angeordneten Drehfedern schließt, ist koaxial zu dem Bolzen 42 bzw. der Aufnahme 37 der Drehvorrichtung 39 ausgerichtet.

Ist der Bolzen 42 ein Gewindebolzen eines Bandteils gem. Fig. 4, erfolgt ein Setzen dieses Bandteiles durch Rotation der Hohlspindel 43 mit dem Greifer 38.

Ist alternativ der mit einem Gewinde versehene Bolzen 42 gegenüber dem Schaft 41 verdrehbar, beispielsweise bei einem Türband gem. Fig. 5, so ist der Bolzen 42 koaxial zu einer in der Hohlspindel 43 geführten Welle 48 positioniert, an deren greiferseitigem Ende ein Werkzeug 49 in Form eines austauschbaren Bits angeordnet ist. Das Werkzeug, in Eingriff mit einem Schraubkopf des Bolzens 42 gebracht, kann durch die Drehen der Welle 48 diesen in Rotation versetzt, während der Greifer 38 den Schaft 41 unverdrehbar hält, womit auch ein derartiges Bandteil in Bohrungen eingesetzt werden kann.

Zweckmäßigerweise wird die Welle 48 auch koaxial zur Hohlspindel 43 angeordnet sein.

Damit Bandteile auch gegenüber einem Türblatt angestellt gesetzt werden können, kann der Träger 27 um eine hier mit der Drehachse 40 der Drehvorrichtung 39 zusammenfallende Schwenkachse gegenüber dem Kreuzsupport 28 verschwenkt werden. Unberührt bleibt hiervon naturgemäß, dass der Träger 27 mit dem Greifer 38 längs seiner Drehachse 50 verfahrbar ist.

## Patentansprüche

1. Vorrichtung für das Setzen eines Bandteils eines Türbandes an ein Türblatt, wobei den Schäften der Bandteile Bolzen vorstehen, mit einem zangenartigen, positionierbaren Greifer für ein Fassen des Schafts und ein Ansetzen des Bandteils an das Türblatt, wobei der Greifer (38) über einem Träger (27) angeordnet an eine drehbare und längsverschiebbare Hohlspindel (43) angeschlossen ist, **dadurch gekennzeichnet dass** in der Hohlspindel (43) eine Welle (48) drehbar und längsverschiebbar gelagert ist und dass an einem greiferseitigen Ende der Welle (48) ein auswechselbares Werkzeug (49) angeschlossen ist.

2. Vorrichtung nach Anspruch 1, **dadurch gekennzeichnet, dass** die Welle (48) koaxial in der Hohlspindel (43) angeordnet ist.

3. Vorrichtung nach Anspruch 1 oder 2, **dadurch gekennzeichnet, dass** ein positionierbares Rundmagazin (32) über seinen Umfang mit Aufnahmen (33) für die Schäfte von Bandteilen (36) von Türbändern vorgesehen ist und dass mittels einer Übergabevorrichtung (34) das Rundmagazin (32) aus einem Wechselmagazin (30) bestückt wird.

4. Vorrichtung nach Anspruch 3, **dadurch gekennzeichnet, dass** die Bolzen (35) der aufgenommenen Bandteile (36) dem Umfang des Rundmagazins (32) vorstehen.

5. Vorrichtung nach Anspruch 3 oder 4, **dadurch gekennzeichnet, dass** zentral vor dem Greifer (38) eine Drehvorrichtung (39) mit Aufnahmen (37) für die Bolzen vorgesehen ist, dass nach Übergabe eines Bandteils von dem Rundmagazin an die Drehvorrichtung (39) und nach einer Drehung der Drehvorrichtung (39) ein Schaft (41) für ein Erfassen durch den Greifer (38) positioniert ist.

6. Vorrichtung nach Anspruch 5, **gekennzeichnet durch** einen Verfahr- und/oder einen Verschwenkweg zwischen dem Greifer (38) und der Drehvorrichtung (39) längs der Drehachse (40) der Drehvorrichtung (39).

7. Vorrichtung nach Anspruch 5 oder 6, **gekennzeichnet durch** einen Verfahr- und/oder einen Verschwenkweg zwischen dem Greifer (38) und der Drehvorrichtung (39) längs der Drehachse (50) der Hohlspindel (43).

8. Vorrichtung nach Anspruch 5, **dadurch gekennzeichnet, dass** eine Drehachse (40) der Drehvorrichtung (39) mit einer Schwenkachse des Trägers (27) gegenüber einem Kreuzsupport (28) zusammen fällt.

9. Vorrichtung nach Anspruch 8, **dadurch gekennzeichnet, dass** der Träger (27) gegenüber dem Kreuzsupport (28) längs der Drehachse (50) der Hohlspindel (43) verfahrbar ist.

## Claims

1. A device for placing a hinge part for a door hinge on a door leaf, wherein bolts comprising a tong-like gripper, which can be positioned, for gripping the shank and for placing the hinge part on the door leaf, project from the shanks of the hinge parts, wherein the gripper (38) is connected to a hollow spindle (43), which is rotatable and which can be displaced longitudinally, above a support (27), **characterized in that** a shaft (48) is supported in the hollow spindle (43) so as to be rotatable and capable of being displaced longitudinally and **in that** an interchangeable tool (49) is connected to an end of the shaft (48) on the side of the gripper.

2. The device according to claim 1, **characterized in that** the shaft (48) is arranged coaxially in the hollow spindle (43).

3. The device according to claim 1 or 2, **characterized in that** a circular magazine (32), which can be positioned, is provided with accommodations (33) for the shanks of hinge parts (36) of door hinges across its periphery, and **in that** the circular magazine (32) is loaded from an interchangeable magazine (30) by means of a transfer device (34).

4. The device according to claim 3, **characterized in that** the bolts (35) of the accommodated hinge parts (36) project from the periphery of the circular magazine (32).

5. The device according to claim 3 or 4, **characterized in that** a rotating device (39) is provided with accommodations (37) for the bolts centrally upstream of the gripper (38), that a shank (41) for a detection by means of the gripper (38) is positioned after transfer of a hinge part from the circular magazine to the rotating device (39) and after a rotation of the rotating device (39).

6. The device according to claim 5, **characterized by** a displacing and/or a pivoting path between the gripper (38) and the rotating device (39) along the axis of rotation (40) of the rotating device (39).

7. The device according to claim 5 or 6, **characterized by** a displacing and/or a pivoting path between the gripper (38) and the rotating device (39) along the axis of rotation (50) of the hollow spindle (43).

8. The device according to claim 5, **characterized in that** an axis of rotation (40) of the rotating device (39) coincides with a pivot axis of the support (27) with respect to a cross slide (28).

9. The device according to claim 8, **characterized in that** the support (27) can be displaced along the axis of rotation (50) of the hollow spindle (43) with respect to the cross slide (28).

## Revendications

1. Dispositif pour le placement d'une penture de porte sur un vantail de porte, des boulons saillant du montant de la porte, avec un grappin positionnable, de type pince pour saisir le montant et appliquer la penture sur le vantail de porte, le grappin (38) disposé par-dessus un support (27) étant raccordé sur une broche creuse (43) rotative et déplaçable dans le sens longitudinal, **caractérisé en ce que** dans la broche creuse (43) un arbre (48) est logé de façon rotative et déplaçable dans le sens longitudinal et **en ce que** sur une extrémité côté grappin de l'arbre (48) est raccordé un outil interchangeable (49).

2. Dispositif selon la revendication 1, **caractérisé en ce que** l'arbre (48) est disposé de façon coaxiale dans la broche creuse (43).

3. Dispositif selon la revendication 1 ou 2, **caractérisé en ce qu'**un magasin rond (32) positionnable avec sur sa circonférence des logements (33) pour les montants de pentures (36) de portes est prévu et **en ce qu'**au moyen d'un dispositif de transfert (34), le magasin rond (32) est garni à partir d'un magasin de rechange (30).

4. Dispositif selon la revendication 3, **caractérisé en ce que** les boulons (35) des pentures (36) réceptionnées saillissent par-dessus la circonférence du magasin rond (32).

5. Dispositif selon la revendication 3 ou 4, **caractérisé en ce qu'**au centre à l'avant du grappin (38) est prévu un dispositif de rotation (39) avec des logements (37) pour les boulons, **en ce qu'**après le transfert d'une penture du magasin rond vers le dispositif de rotation (39) et après une rotation du dispositif de rotation (39), un montant (41) est positionné pour être saisi par le grappin (38).

6. Dispositif selon la revendication 5, **caractérisé par** un trajet de déplacement et/ou de pivotement entre le grappin (38) et le dispositif de rotation (39) le long de l'axe de rotation (40) du dispositif de rotation (39).

7. Dispositif selon la revendication 5 ou 6, **caractérisé par** un trajet de déplacement et/ou de pivotement entre le grappin (38) et le dispositif de rotation (39) le long de l'axe de rotation (50) de la broche creuse (43).

8. Dispositif selon la revendication 5, **caractérisé en ce qu'**un axe de rotation (40) du dispositif de rotation (39) coïncide avec un axe de pivotement du support (27) par rapport à un support croisé (28).

9. Dispositif selon la revendication 8, **caractérisé en ce que** le support (27) est déplaçable par rapport au support croisé (28) le long de l'axe de rotation (50) de la broche creuse (43).
